# EUROPEAN PATENT APPLICATION

(11) **EP 2 413 523 A1**
(43) Date of publication of application: **01.02.2012**
(21) Application number: 11153996.1
(22) Date of filing: 10.02.2011
(51) Int. Cl.: H04B 13/00

(54) **Device and Method for Human Body Communication Network System**

(30) Priority: 30.07.2010 KR 20100074271
(71) Applicant: Pantech Co., Ltd., Seoul 121-270 (KR)
(72) Inventor: Cho, Kyoo Hyung, 110-550, Seoul (KR); Lee, Don Soo, 121-270, Seoul (KR); Kim, Myun Jung, 122-930, Seoul (KR); Kim, Yeong Geun, 422-753, Gyeonggi-do (KR); Moon, So Lim, 152-090, Seoul (KR); Lee, Yun Hee, 110-813, Seoul (KR); Lim, Seong Ho, 156-070, Seoul (KR); Cho, Chang Hyun, 156-806, Seoul (KR)
(74) Representative: Jordan, Volker Otto Wilhelm

(57) **Abstract**

Provided are a device and a method for recognizing a multiplex contact pattern in a human body communication network system, which may analyze a multiplex contact pattern of devices connected via a human body communication, may determine one of meaningful contact patterns as a group pattern, and may provide a communication service between devices in the group pattern or execute a related application.

## Description

### CROSS-REFERENCE TO RELATED APPLICATION

This application claims priority from and the benefit under 35 U.S.C. § 119(a) of Korean Patent Application No. 10-2010-0074271, filed on July 30, 2010, which is hereby incorporated by reference for all purposes as if fully set forth herein.

### BACKGROUND

Field

Exemplary embodiments of the present invention relate to a device and a method for recognizing a multiplex contact pattern of devices connected via a human body communication.

Discussion of the Background

Signal transmission technologies for transmitting various data between mobile terminals include a human body communication technology. The human body communication technology enables data communication using a human body as a transmission medium, similar to an electrical wire. The human body communication technology relies on the fact that a human body has properties of a conductor through which a weak electric current may flow, and that electrical signals are transmittable using the human body. Using this phenomenon, if a voltage is applied to a human body in contact with a transmitter/a receiver, an electric field of the surface of the human body changes, and the transmitter/receiver amplifies a small difference in voltage and reads electrical signals. Here, the electric current flowing through the human body is a maximum of about 500 µA, which is equal to a level of an electric current used in a body fat scale, and is harmless to the human body.

In other words, using an electric current running through a human body serving as a transmission medium similar to an electrical wire, the human body communication may enable transmission of various data, such as a picture, a moving image, a sound source, and the like, by making contact with a finger or shaking hands without a need for an Internet network while reducing power consumption. However, the human body communication technology has been developed based on a one-to-one human relationship.

### SUMMARY

Exemplary embodiments of the present invention provide a device and a method for recognizing a multiplex contact pattern in a human body communication network system.

Exemplary embodiments of the present invention also provide a device and a method for recognizing a multiplex contact pattern of devices connected via a human body communication in a human body communication network system, and determining devices included in a group pattern.

Exemplary embodiments of the present invention also provide a device and a method for recognizing a multiplex contact pattern of devices connected via a human body communication in a human body communication network system, determining a group pattern, assigning a certification code to each of devices in the group pattern to enable secure human body communication between the devices in the group pattern, and performing a human body communication using the assigned certification code.

Exemplary embodiments of the present invention also provide a device and a method for recognizing a multiplex contact pattern of devices connected via a human body communication in a human body communication network system, determining a group pattern, and performing an application corresponding to the group pattern.

According to embodiments of the present invention, a device and a method for recognizing a multiplex contact pattern in a human body communication network system may form a multiplex pattern data transmission network by recognizing a multiplex contact and extracting a pattern, and may use various applications of a human body communication using characteristics of each pattern. Also, the apparatus and the method for recognizing a multiplex contact pattern in a human body communication network system may establish an independent secure communication in a group pattern determined through pattern recognition by sharing data for a wired/wireless communication connection if a human body communication is disconnected in the group pattern.

Additional features of the invention will be set forth in the description which follows, and in part will be apparent from the description, or may be learned by practice of the invention.

An exemplary embodiment of the present invention discloses a master device to recognize a multiplex contact pattern in a human body communication network system, including a human body communication unit to transmit and/or receive data via a human body; a connection information collecting unit to receive connection information from each of a plurality of slave devices connected in a human body communication network through the human body communication unit; a pattern analyzing unit to analyze a type of a connection pattern of the connected slave devices using the connection information; and a pattern determining unit to determine a group pattern to be managed as a group from the analyzed pattern type based on a selection of a user or a predetermined condition.

An exemplary embodiment of the present invention discloses a slave device to recognize a multiplex contact pattern in a human body communication network system, including a human body communication unit to transmit and/or receive data via a human body; a connection type detecting unit to check device information of a device connected to the slave device by a direct contact and to generate connection type information comprising the device information of the connected device; and a connection information providing unit to transmit connection information comprising identity information of the slave device, location information of the slave device, and the connection type information to a master device of the human body communication network through the human body communication unit.

Another exemplary embodiment of the present invention discloses a method for recognizing a multiplex contact pattern by a master device in a human body communication network system, including receiving connection information from each of a plurality of slave devices connected in a human body communication network via a human body communication if the human body communication network is formed by a multiplex contact; analyzing a type of a connection pattern of the connected slave devices using the connection information; and determining a group pattern to be managed as a group from the analyzed pattern type based on a selection of a user or a predetermined condition.

Another exemplary embodiment of the present invention discloses a method for providing recognition of a multiplex contact pattern by a slave device in a human body communication network system, including checking device information of a device connected by a direct contact if a human body communication network is formed by a multiplex contact; generating connection type information comprising the device information of the connected device; and transmitting connection information comprising identity information of the slave device, location information of the slave device, and the connection type information to a master device of the human body communication network via a human body communication.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram of a master device according to an exemplary embodiment of the present invention.

FIG. 2 is a block diagram of a slave device according to an exemplary embodiment of the present invention.

FIG. 3 is a flowchart of a method for recognizing a multiplex contact pattern in a master device according to an exemplary embodiment of the present invention.

FIG. 4 is a flowchart of a method for providing connection information for recognition of a multiplex contact pattern in a slave device according to an exemplary embodiment of the present invention.

FIG. 5 illustrates a human body communication network formed by a multiplex contact according to an exemplary embodiment of the present invention.

FIG. 6 illustrates a circular pattern in a human body communication network formed by a multiplex contact according to an exemplary embodiment of the present invention.

FIG. 7 illustrates a longest linear pattern in a human body communication network formed by a multiplex contact according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

Exemplary embodiments of the present invention provide a device and a method for analyzing a multiplex contact pattern of devices connected via a human body communication in a human body communication network system, determining one of meaningful contact patterns as a group pattern, and providing a communication service between devices in the group pattern or executing a related application.

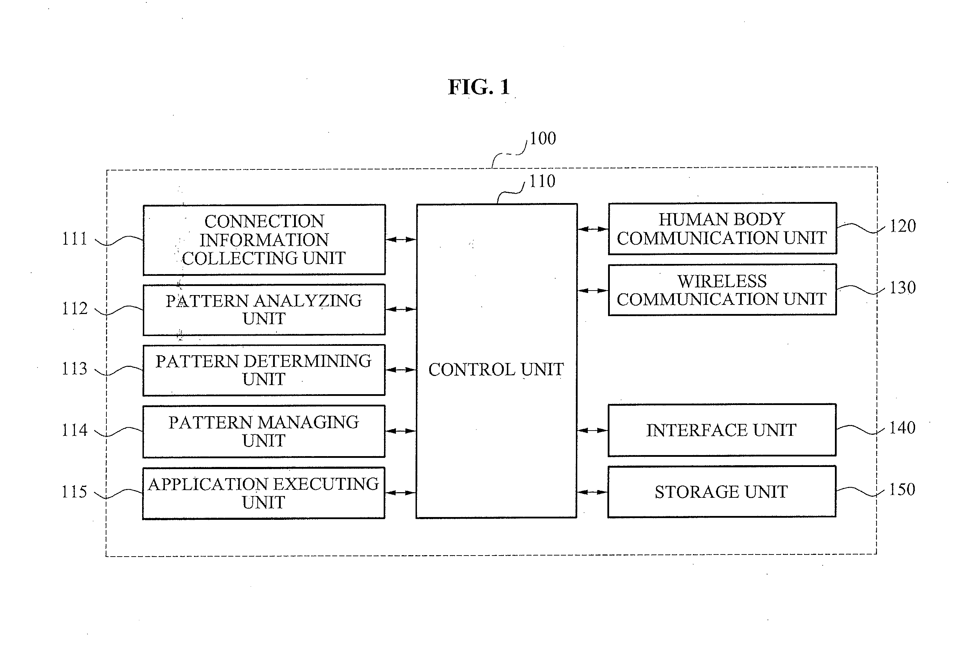

FIG. 1 is a block diagram of a master device according to an exemplary embodiment of the present invention. Although described herein as a master or servant device, any master or servant device may include features of the other of a master or servant device such that a single device may include some or all features of each of the master or servant device. Referring to FIG. 1, the master device 100 may include a control unit 110, a connection information collecting unit 111, a pattern analyzing unit 112, a pattern determining unit 113, a pattern managing unit 114, an application executing unit 115, a human body communication unit 120, a wireless communication unit 130, an interface unit 140, and a storage unit 150.

The human body communication unit 120 may transmit and receive data to and from a slave device connected via a human body if an application related to recognition of a multiplex contact pattern is executed or operating. The human body communication unit 120 may transmit data by modulating data of the master device 100 and by transmitting a transmission current including the modulated data via a human body. The human body communication unit 120 may receive data by removing noise from a signal received via a human body, and amplifying and demodulating the received signal.

The wireless communication unit 130 may wirelessly transmit and receive data to and from a slave device. The wireless communication unit 130 may transmit and receive data via a short distance wireless communication, for example, Wi-Fi, Bluetooth, Infrared, and the like. However, aspects are not limited thereto such that the wireless communication unit 130 may also use a wired communication other than a human body communication.

The interface unit 140 may provide an interface to a user. The interface unit 140 may receive an input from the user and may provide the user with information, such as setting information, control information, service information, and the like, that may occur during recognition of a multiplex contact pattern. Also, the interface unit 140 may receive an input of a group pattern and a selection of an application to be used.

The storage unit 150 may store connection information received from slave devices. Also, the storage unit 150 may store an application executable based on a selection of a user or a group pattern.

The connection information collecting unit 111 may receive and collect connection information from each of a plurality of slave devices connected in a human body communication network through the human body communication unit 120. The connection information may include identity information of a connected slave device, location information of the connected slave device, and connection type information indicating a type of a connection between the connected slave device and a device connected to the connected slave device. Also, the connection type information may include connection direction information.

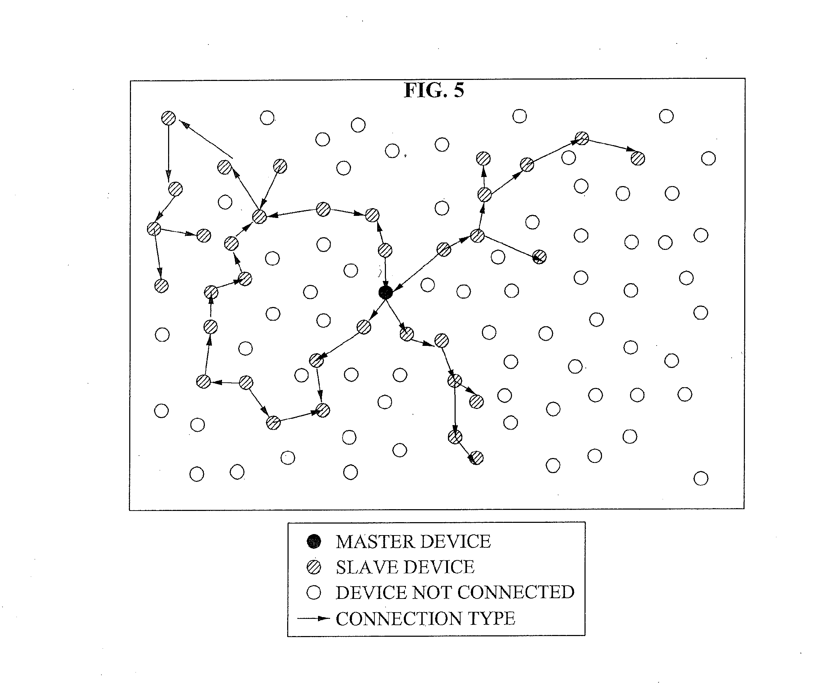

The pattern analyzing unit 112 may analyze a type of a connection pattern of connected slave devices using connection information of the connected slave devices. The type of the connection pattern is described with reference to FIG. 5.

FIG. 5 illustrates a human body communication network formed by a multiplex contact according to an exemplary embodiment of the present invention. Referring to FIG. 5, a filled circle may indicate a master device, a shaded circle may indicate a connected slave device in the human body communication network, and an open circle may indicate a device that is not connected in the human body communication network. Also, an arrow may represent a connection type, and a direction of the arrow may represent a connection direction. The connection direction may represent a direction from a device that attempts a contact to a device to which the contact is attempted. That is, the connection direction may go from a device that attempts a contact to a device to which the contact is attempted.

Referring back to FIG. 1, the pattern determining unit 113 may determine a group pattern, which will be managed as a group, from an analyzed pattern type based on a selection of a user or based on a condition. Here, the pattern determining unit 113 may output an analyzed pattern type to a user via the interface unit 140, and the pattern determining unit 113 may receive a selection of a group pattern from the user. The condition for determining a group pattern may include, for example, a smallest or largest circular pattern, a circular pattern including at least five devices, a longest linear pattern, a longest linear pattern from a master device, a linear pattern including at least five devices, a star-shaped pattern, and the like.

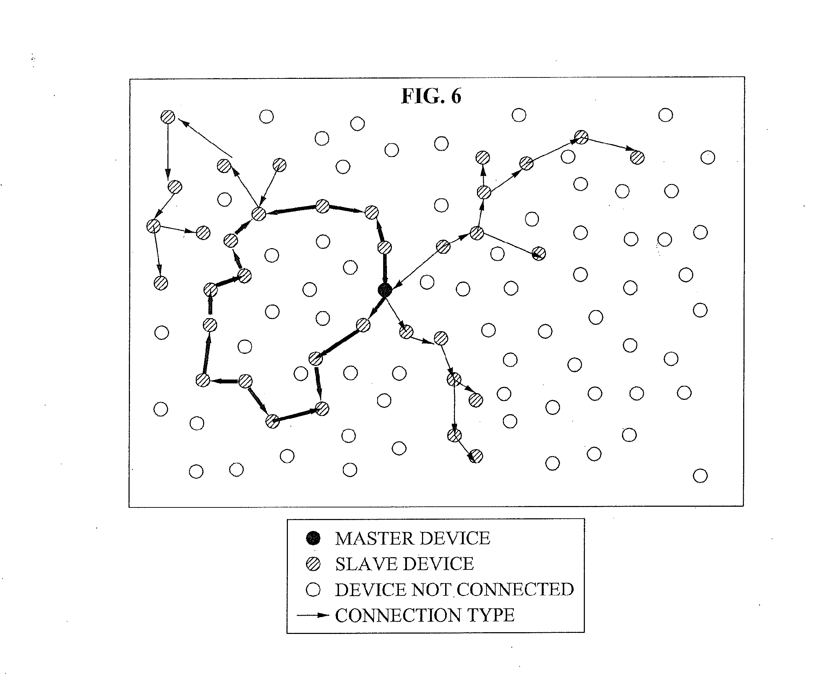

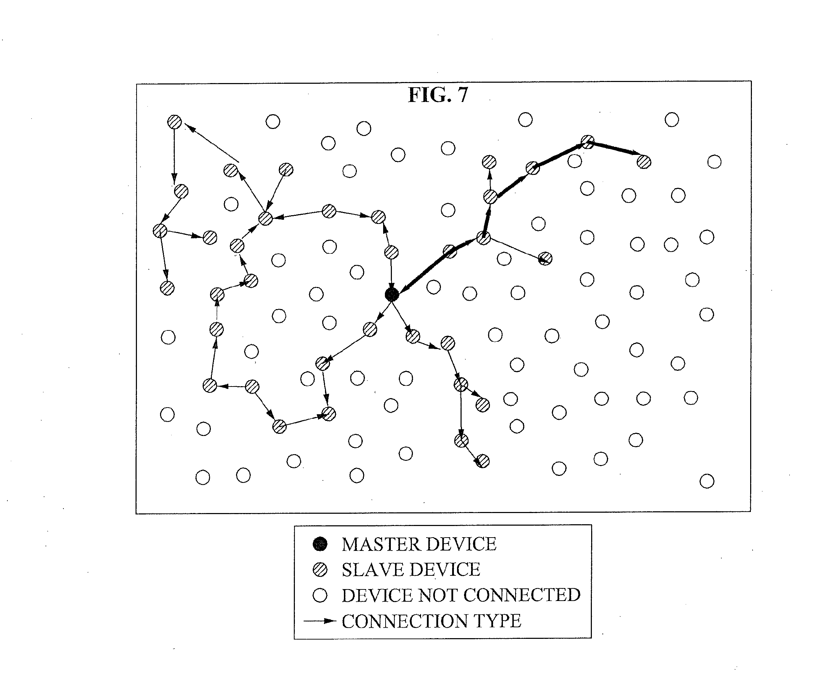

The determined group pattern may be as shown in, for example, FIG. 6 or FIG. 7. FIG. 6 illustrates a circular pattern in a human body communication network formed by a multiplex contact according to an exemplary embodiment of the present invention. FIG. 7 illustrates a longest linear pattern in a human body communication network formed by a multiplex contact according to an exemplary embodiment of the present invention.

Referring to FIG. 6 and FIG. 7, a filled circle may indicate a master device, a shaded circle may indicate a connected slave device in the human body communication network, and an open circle may indicate a device that is not connected in the human body communication network. An arrow may represent a connection type, and a direction of the arrow may represent a connection direction. Also, a thick arrow may represent a determined group pattern.

Referring back to FIG. 1, the pattern managing unit 114 may notify slave devices in a group pattern that the slave devices are included in a group. Also, the pattern managing unit 114 may assign a certification code to each of a plurality of slave devices in the group pattern, and the pattern managing unit 114 may certify the slave devices in the group pattern using the certification code if a human body communication is made between the slave devices in the group pattern.

Also, the pattern managing unit 114 may transmit and receive wireless communication connection information to and from slave devices in a group pattern, and if a human body communication of a slave device among the plurality of slave devices in the group pattern is disconnected, the pattern managing unit 114 may enable the master device 100 to make a wireless communication with the disconnected slave device via the wireless communication unit 130 using the wireless communication connection information.

The application executing unit 115 may execute an application selected by a user or a predetermined application corresponding to a type of a group pattern. A selection of the application may be input by user via the interface unit 140.

The control unit 110 may control the operation of the master device 100. Also, the control unit 110 may transfer authority of the master device 100 to manage a group pattern to a slave device selected by a user or a slave device corresponding to a condition, among slave devices in the group pattern, if the master device 100 leaves a human body communication network or if the authority of the master device 100 is to be assigned.

Also, the control unit 110 may perform functions of the connection information collecting unit 111, the pattern analyzing unit 112, the pattern determining unit 113, the pattern managing unit 114, and the application executing unit 115. Although aspects of each of the control unit 110, the connection information collecting unit 111, the pattern analyzing unit 112, the pattern determining unit 113, the pattern managing unit 114, and the application executing unit 115 are described individually, the control unit 110 may perform each of the functions of the connection information collecting unit 111, the pattern analyzing unit 112, the pattern determining unit 113, the pattern managing unit 114, and the application executing unit 115. Also, the control unit 110 may perform a portion of each of the functions of the connection information collecting unit 111, the pattern analyzing unit 112, the pattern determining unit 113, the pattern managing unit 114, and/or the application executing unit 115.

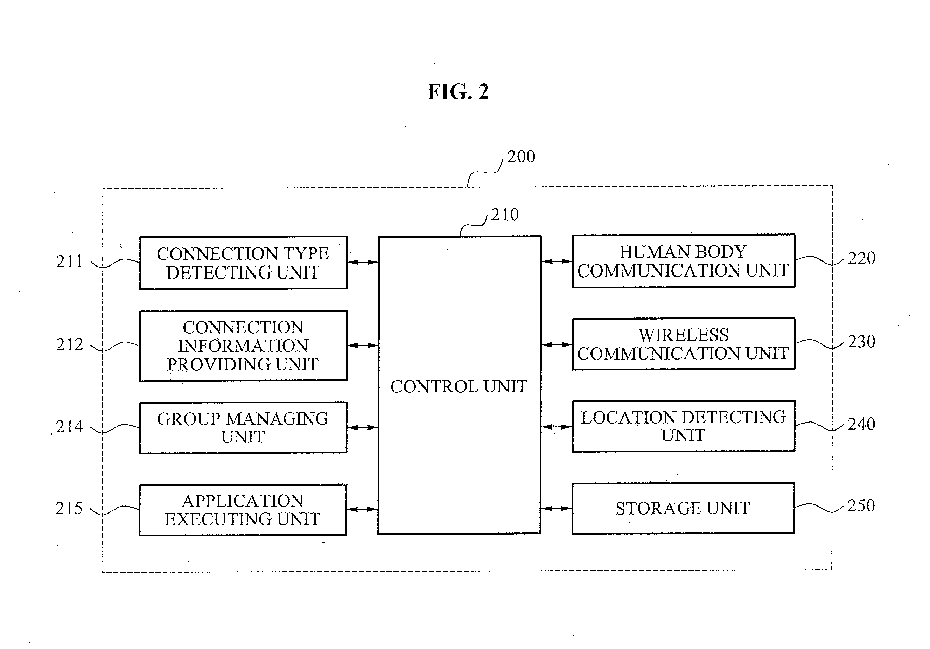

FIG. 2 is a block diagram of a slave device according to an exemplary embodiment of the present invention. Referring to FIG. 2, the slave device 200 may include a control unit 210, a connection type detecting unit 211, a connection information providing unit 212, a group managing unit 214, an application executing unit 215, a human body communication unit 220, a wireless communication unit 230, a location detecting unit 240, and a storage unit 250.

The human body communication unit 220 may transmit and receive data to and from a device connected via a human body if an application related to recognition of a multiplex contact pattern is executed or operating. Here, the connected device may be a master device or another slave device. The human body communication unit 220 may transmit data by modulating data of the slave device 200 and transmitting a transmission current including the modulated data via a human body. The human body communication unit 220 may receive data by removing noise from a signal received via a human body, and amplifying and demodulating the received signal.

The wireless communication unit 230 may wirelessly transmit and receive data to and from a connected device. The wireless communication unit 230 may transmit and receive data via a short distance wireless communication, for example, Wi-Fi, Bluetooth, Infrared, and the like. However, aspects are not limited thereto such that the wireless communication unit 230 may also use a wired communication other than a human body communication.

The location detecting unit 240 may detect a location of the slave device 200. The location of the slave device 200 may be detected by, for example, using a GPS signal, using at least three neighboring base stations, using a neighboring object of which a location is known, and the like.

The storage unit 250 may store an application executed based on a selection of the master device 100 or a group pattern.

The connection type detecting unit 211 may check device information of a device connected by a direct contact through a human body network, and may generate connection type information including the device information of the connected device.

The connection type information may include device information of a device connected by a direct contact, and connection direction information of a connection between the slave device 200 and a device connected to the slave device 200. The connection direction may represent a direction from a device that attempts a contact to a device to which the contact is attempted. Also, a device that attempts a contact and a device to which the contact is attempted may be detected using a skinput technique for sensing a contact portion.

The connection information providing unit 212 may transmit connection information to the master device 100 of the human body communication network via the human body communication unit 220. The connection information may include identity information of a connected device, location information of the connected device, and connection type information.

If the group managing unit 214 receives, from the master device 100, a certification code indicating that the slave device 200 is included in a group pattern, the group managing unit 214 may certify whether the slave device 200 is a device in the group pattern using the certification code if a human body communication is made between devices in the group pattern.

The group managing unit 214 may transmit and receive wireless communication connection information to and from the master device 100 if the slave device 200 is included in a group pattern by the master device 100. If a human body communication of the slave device 200 is disconnected, the group managing unit 214 may enable the slave device 200 to make a wireless communication with devices in the group pattern via the wireless communication unit 230 using the wireless communication connection information.

The application executing unit 215 may execute an application selected by the master device 100 or a predetermined application.

The control unit 210 may control the operation of the slave device 200. Also, the control unit 210 may perform functions of the connection type detecting unit 211, the connection information providing unit 212, the group managing unit 214, and/or the application executing unit 215. Although aspects of each of the control unit 210, the connection type detecting unit 211, the connection information providing unit 212, the group managing unit 214, and the application executing unit 215 are described individually, the control unit 210 may perform each of the functions of the connection type detecting unit 211, the connection information providing unit 212, the group managing unit 214, the application executing unit 215. Also, the control unit 210 may perform a portion of each of the functions of the connection type detecting unit 211, the connection information providing unit 212, the group managing unit 214, and/or the application executing unit 215.

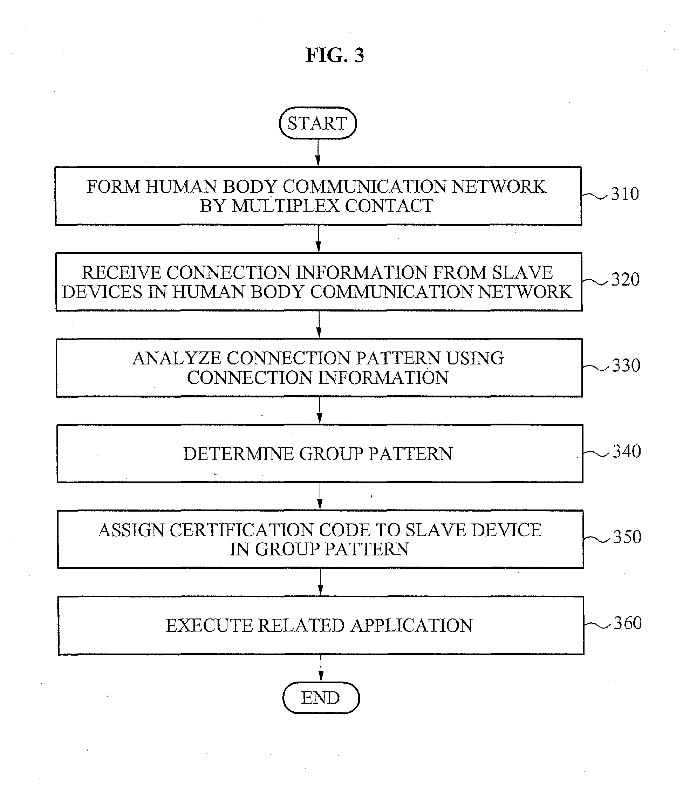

Hereinafter, a method for recognizing a multiplex contact pattern in the above human body communication network system according to an exemplary embodiment of the present invention is described with reference to FIG. 3.

FIG. 3 is a flowchart of a method for recognizing a multiplex contact pattern in a master device according to an exemplary embodiment of the present invention. Referring to FIG. 3, the master device 100 may form a human body communication network with devices capable of human body communication by a multiplex contact in operation 310. Here, a device connected in the human body communication network may be a slave device.

In operation 320, the master device 100 may receive connection information via a human body communication from each slave device in the human body communication network. The connection information may include identity information of a connected slave device, location information of the connected slave device, and connection type information indicating a type of a connection between the connected slave device and a device connected to the connected slave device.

In operation 330, the master device 100 may analyze a type of a connection pattern between the connected slave devices using the connection information.

In operation 340, the master device 100 may determine a group pattern, which will be managed as a group, from the analyzed pattern type. The master device 100 may determine a pattern selected by a user or a pattern corresponding to a condition as a group pattern. Further, the master device 100 may notify the slave devices 200 in the determined group pattern that the slave devices 200 are included in the group.

In operation 350, the master device 100 may assign a certification code indicating that a slave device is included in the group to the slave device in the group pattern. Further, the master device 100 may certify the slave devices 200 in the group pattern using the certification code if the slave devices 200 are included in the group.

In operation 360, the master device 100 may execute an application selected by the user or a predetermined application corresponding to the group pattern.

Further, the master device 100 may transmit and receive wireless communication connection information to and from the slave devices 200 in the group pattern, and may communicate with a slave device 200 if the slave device 200 is disconnected from the human body communication network. Moreover, the master device 100 may transfer authority of the master device 100 to manage the group pattern to one of the slave devices 200. The slave device 200 to which authority of the master device 100 is transferred may be selected by a user and/or may be selected according to predetermined conditions.

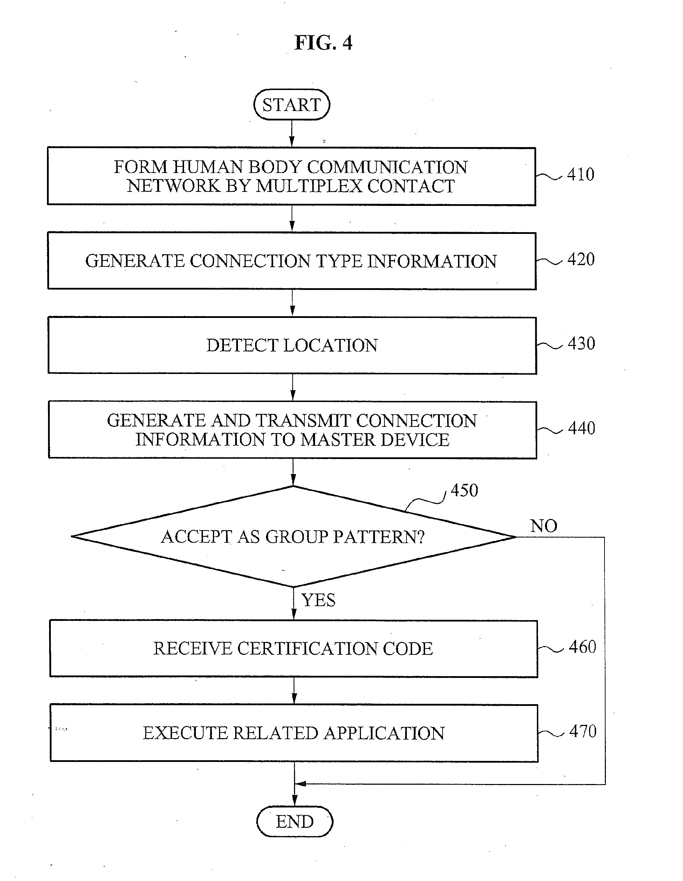

FIG. 4 is a flowchart of a method for providing connection information for recognition of a multiplex contact pattern in a slave device according to an exemplary embodiment of the present invention. Referring to FIG. 4, the slave device 200 may form a human body communication network with devices capable of human body communication by a multiplex contact in operation 410.

In operation 420, the slave device 200 may generate connection type information of the slave device 200. Further, the slave device 200 may check device information of a device connected by a direct contact if a human body communication network is form by the multiplex contact. The connection type information may include device information of the device connected by the direct contact, and connection type information and connection direction information of a connection between the slave device 200 and the device connected to the slave device 200.

In operation 430, the slave device 200 may detect a location of the slave device 200. The location of the slave device 200 may be detected by, for example, using a GPS.

In operation 440, the slave device 200 may generate connection information including the identity information of the slave device 200, the location information of the slave device 200, and the connection type information of the slave device 200, and may transmit the connection information to the master device 100.

If the slave device 200 is accepted to a group pattern by the master device 100 in operation 450, the slave device 200 may receive a certification code from the master device 100 in operation 460. The certification code may be used to certify that the slave device 200 is a device included in a group pattern and to secure communication.

In operation 470, the slave device 200 may execute an application selected by the master device 100 or a predetermined application. Further, the slave device 200 may transmit and receive wireless communication connection information to and from the master device 100 if the slave device 200 is included in the group pattern by the master device 100. And, the slave device 200 may communication wirelessly with the master device 100 if the human body communication of the slave device 200 is disconnected.

According to an exemplary embodiment, recognition of a multiplex contact pattern may be applied to waiting line management or crowd control. For example, if a user waits in a line for a time at the entrance of a concert hall, a human body communication may be sequentially established between persons in front via a hand, or a dielectric that is a conductor, so that the waiting line may be considered as a linear pattern-type human body communication network. After the linear pattern-type human body communication network is formed, a master device controlled by a concert operator may determine a waiting number and assign the determined number to a user equipment in the waiting line via a human body communication.

According to an exemplary embodiment, recognition of a multiplex contact pattern may be applied to a secure conference. In the case of a conference using security, a circular pattern-type human body communication network may be formed by a multiplex connection in the type of a closed circle. After the circular pattern-type human body communication network is formed, only a device in a corresponding circular pattern may be permitted for communication, and a subsequent contact or other communication may not be permitted to receive communication data in the circular pattern.

According to an exemplary embodiment, recognition of a multiplex contact pattern may be applied to a flash mob. The flash mob refers to an activity determined in advance performed by a plurality of people at a predetermined time and/or place. A circular pattern-type human body communication network may be formed by a multiplex connection of people assembled for a flash mob in an appointed place in the type of a closed circle. The people may receive a command for a predetermined activity via a human body communication. After the flash mob ends, the multiplex connection may be disconnected and the people may be disassembled.

According to an exemplary embodiment, recognition of a multiplex contact pattern may be applied to party formation in a game. In the case of a game requiring a connection relationship between parties, one group may be considered as a circular pattern-type human body communication network. Each team may be formed in the type of a circular pattern, master devices of teams may be connected to each other, and a team-based game may be played. That is, a circular pattern-type human body communication network formed by recognition of a multiplex contact pattern may be used as an efficient interface means in an X/O game, a virtual reality game including formation of parties, and the like.

According to an exemplary embodiment, recognition of a multiplex contact pattern may be applied to a payment for a same item. For example, if there is congestion at a reader at which a payment card is touched while commuting by a bus, a subway, and the like, a linear pattern-type human body communication network may be formed by sequentially contacting persons in front, and a device included in the linear pattern may make payment, thereby reducing a bottleneck phenomenon at an exit. Recognition of a linear connection pattern may prevent breaking into the queue.

According to an exemplary embodiment, recognition of a multiplex contact pattern may be applied to marketing. For example, if a coffee company advertises to give a gift on condition that at least fifteen people form a pattern, for example, a mug, a corporate logo, and the like, participants may form a mug-shaped pattern and report pattern information to the coffee company. The coffee company may receive the pattern information and provide a coupon to the participants. The coffee company may transmit the coupon to a master device, and a user of the master device may provide the coupon to people connected to the pattern via a human body communication.

According to an exemplary embodiment, recognition of a multiplex contact pattern may be applied to synchronization for data sharing. If a circular pattern-type human body communication network is formed between users registered in a group of an application, certification may be performed to check whether a user is registered in the group. If all users are members of the group, the corresponding application may automatically enable the users to share data, such as a picture, a moving image, and the like. If a non-member is included in the circular pattern, the application may disable data sharing or may enable all members but the non-member to share data.

The exemplary embodiments according to the present invention may be recorded in non-transitory computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of non-transitory computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
Provided are a device and a method for recognizing a multiplex contact pattern in a human body communication network system, which may analyze a multiplex contact pattern of devices connected via a human body communication, may determine one of meaningful contact patterns as a group pattern, and may provide a communication service between devices in the group pattern or execute a related application.

## Claims

1. A master device to recognize a multiplex contact pattern in a human body communication network system, comprising:
a human body communication unit to transmit and/or receive data via a human body;
a connection information collecting unit to receive connection information from each of a plurality of slave devices connected in a human body communication network through the human body communication unit;
a pattern analyzing unit to analyze a type of a connection pattern of the connected slave devices using the connection information; and
a pattern determining unit to determine a group pattern to be managed as a group from the analyzed pattern type based on a selection of a user or a predetermined condition.

2. The master device of claim 1, wherein the connection information comprises at least one of identity information of the connected slave devices, location information of the connected slave devices, and connection type information indicating a type of a connection between one of the connected slave devices and a device connected to the connected slave device.

3. The master device of claim 1 or claim 2, further comprising:
a pattern managing unit to notify slave devices in the group pattern that the slave devices are included in the group,
wherein preferably the pattern managing unit assigns a certification code to each of the slave devices in the group pattern, and certifies the slave devices in the group pattern using the certification code if a human body communication is made between the slave devices in the group pattern.

4. The master device of claim 3, further comprising:
a wireless communication unit to wirelessly transmit or receive data,
wherein the pattern managing unit transmits and receives wireless communication connection information to and from the slave devices in the group pattern, and if a human body communication of a slave device among the slave devices in the group pattern is disconnected, the pattern managing unit enables the master device to make a wireless communication with the disconnected slave device through the wireless communication unit using the wireless communication connection information.

5. The master device of one of claims 1 to 4, further comprising:
an application executing unit to execute an application selected by the user or a predetermined application corresponding to a type of the group pattern, or/and further comprising:
a control unit to transfer authority of the master device to manage the group pattern to a slave device selected by the user or a slave device corresponding to a predetermined condition among the slave devices in the group pattern.

6. A slave device to recognize a multiplex contact pattern in a human body communication network system, comprising:
a human body communication unit to transmit and/or receive data via a human body;
a connection type detecting unit to check device information of a device connected to the slave device by a direct contact and to generate connection type information comprising the device information of the connected device; and
a connection information providing unit to transmit connection information comprising identity information of the slave device, location information of the slave device, and the connection type information to a master device of the human body communication network through the human body communication unit.

7. The slave device of claim 6, further comprising:
a location detecting unit to detect a location of the slave device,
wherein the connection information providing unit transmits connection information comprising the identity information of the connected device, the location information of the connected device, and the connection type information to the master device of the human body communication network through the human body communication unit.

8. The slave device of claim 6 or claim 7, wherein the connection detecting unit checks a direction of a connection between the connected device and the slave device by sensing a contact portion, and generates connection type information comprising the device information of the connected device and the connection direction information.

9. The slave device of one of claims 6 to 8, further comprising:
a group managing unit to receive a certification code indicating the slave device is included in the group pattern from the master device, and to certify whether the slave device is a device included in the group pattern using the certification code if the slave device makes a human body communication with devices in the group pattern,
or/and further comprising:
a wireless communication unit to wirelessly transmit and/or receive data, and
a group managing unit to transmit and receive wireless communication connection information to and from the master device if the slave device is included in the group pattern by the master device, and to enable the slave device to make a wireless communication with devices in the group pattern through the wireless communication unit using the wireless communication connection information if a human body communication of the slave device is disconnected,
or/and further comprising:
an application executing unit to execute an application selected by the master device or a predetermined application.

10. A method for recognizing a multiplex contact pattern by a master device in a human body communication network system, comprising:
receiving connection information from each of a plurality of slave devices connected in a human body communication network via a human body communication if the human body communication network is formed by a multiplex contact;
analyzing a type of a connection pattern of the connected slave devices using the connection information; and
determining a group pattern to be managed as a group from the analyzed pattern type based on a selection of a user or a predetermined condition.

11. The method of claim 10, wherein the connection information comprises at least one of identity information of the connected slave devices, location information of the connected slave devices, and connection type information indicating a type of a connection between the connected slave devices and devices connected to the connected slave devices.

12. The method of claim 10 or claim 11, further comprising:
notifying slave devices in the group pattern that the slave devices are included in the group if the group pattern is determined,
or/and further comprising:
assigning a certification code to each of slave devices in the group pattern if the group pattern is determined; and
certifying the slave devices in the group pattern using the certification code if a human body communication is made between the slave devices in the group pattern,
or/and further comprising:
transmitting and receiving wireless communication connection information to and from slave devices in the group pattern if the group pattern is determined; and
if a human body communication of a slave device among the slave devices in the group pattern is disconnected, enabling the master device to make a wireless communication with the disconnected slave device using the wireless communication connection information,
or/and further comprising:
executing an application selected by the user or a predetermined application corresponding to a type of the group pattern,
or/and further comprising:
transferring authority of the master device to manage the group pattern to a slave device selected by the user or a slave device corresponding to a predetermined condition among slave devices in the group pattern.

13. A method for providing recognition of a multiplex contact pattern by a slave device in a human body communication network system, comprising:
checking device information of a device connected by a direct contact if a human body communication network is formed by a multiplex contact;
generating connection type information comprising the device information of the connected device; and
transmitting connection information comprising identity information of the slave device, location information of the slave device, and the connection type information to a master device of the human body communication network via a human body communication.

14. The method of claim 13, further comprising:
detecting a location of the slave device,
wherein the transmitting the connection information comprises transmitting connection information comprising the identity information of the connected device, the location information of the connected device, and the connection type information to the master device of the human body communication network via a human body communication.

15. The method of claim 13 or claim 14, wherein the generating the connection type information comprises:
checking a direction of a connection between the connected device and the slave device by sensing a contact portion; and
generating connection type information comprising the device information of the connected device and the connection direction information.

16. The method of one of claims 13 to 15, further comprising:
receiving a certification code indicating the slave device is included in the group pattern from the master device; and
certifying whether the slave device is a device included in the group pattern using the certification code if the slave device makes a human body communication with a device in the group pattern,
or/and further comprising:
transmitting and receiving wireless communication connection information to and from the master device via the human body communication if the slave device is included in the group pattern by the master device; and enabling the slave device to make a wireless communication with devices in the group pattern using the wireless communication connection information if a human body communication of the slave device is disconnected,
or/and further comprising:
executing an application selected by the master device or a predetermined application.
